# EUROPEAN PATENT SPECIFICATION

(11) **EP 0 736 047 B1**
(45) Date of publication and mention of the grant of the patent: **04.03.1998**
(21) Application number: 95905100.4
(22) Date of filing: 21.12.1994
(51) Int. Cl.: C08F 8/00, C10L 1/10

(54) **PROCESS FOR PREPARING CARBAMATES**
VERFAHREN ZUR HERSTELLUNG VON CARBAMATEN
PROCEDE DE PREPARATION DE CARBAMATES

(30) Priority: 22.12.1993 US 172371
(43) Date of publication of application: 09.10.1996
(73) Proprietor: SHELL INTERNATIONALE RESEARCH MAATSCHAPPIJ B.V., 2596 HR Den Haag (NL)
(72) Inventor: SEMPLE, Thomas, Carl, Friendswood, TX 77546 (US); THOMASON, Terry, Blane, Houston, TX 77077 (US)
(86) International application number: EP9404269
(87) International publication number: WO9517439

(56) References cited:
- EP-A- 0 414 963
- EP-A- 0 533 278
- EP-A- 0 543 225

## Description

The present invention relates to a process for preparing carbamates, and in particular polyolefin-N-substituted-carbamates suitable for use as gasoline additives.

It is known that during the initial operation of a new or clean internal combustion engine, a gradual increase in octane requirement (OR), i.e. the fuel octane number required for knock-free operation, increases with the build-up of combustion chamber deposits until a stable level is reached, which generally corresponds to a time when deposits remain relatively constant. The actual stable level can vary with engine design and even with individual engines of the same design.

Many additives are known which can be added to hydrocarbon fuels to attempt to prevent or reduce deposit formation or remove or modify formed deposits in the combustion chamber and adjacent surfaces, such as valves, ports and spark plugs, in order to reduce octane requirement.

Continued improvement in design of internal combustion engines, e.g., fuel injection and the like, brings changes to the atmosphere of the combustion chamber so there is a continuing need for new additives to control the problem of deposits and improve driveability which is usually related to deposits.

It is known from EP-A-414 963 and EP-A-533 278 that polyolefin-N-substituted carbamates are gasoline additives which are helpful in preventing, or reducing the accumulation of engine deposits. They may thereby be effective in controlling octane requirement increase. However, known methods of making such additives result in comparatively low yields. For example, the test used in EP-A-414 963 to determine yield was based on Basic N content before and after reaction (see EP-A-414963, Example 1). Basic N content assessment has subsequently been found to be an invalid test for determining yield. This is due to the reaction of an alkyl chloride with one of the Basic N's in the starting amine. Alkyl chlorides result from dissociation of chloroformates used as reagent to place a carboxyl group on one of the nitrogens in the starting amine.

It has now been found possible to prepare polyolefin-N-substituted carbamates in enchanced yield relative to the above known process.

According to the present invention there is provided a process for preparing a carbanate which comprises contacting in the presence of a base a polyolefin-secondary-amine with a chloroformate compound of the formula IV 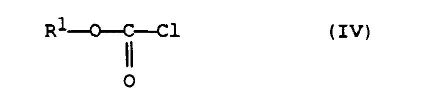 in which R¹ is a hydrocarbyl or substituted hydrocarbyl group containing up to 20 carbon atoms, thereby producing a polyolefin-N-substituted-carbamate of formula I 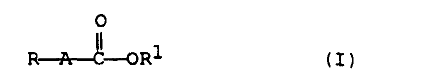 in which R is a polyolefin radical having an average molecular weight in the range from 500 to 9,900, R¹ is a hydrocarbyl or substituted hydrocarbyl group containing up to 20 carbon atoms, and A is derived from an N-substituted amino group in which the substituent is a hydrocarbyl or substituted hydrocarbyl group containing up to 20 carbon atoms, and removing hydrogen chloride formed in producing the carbamate of formula I as a salt.

The moiety A of the polyolefin-N-sustituted carbamates of formula I is derived from an N-substituted monoamine or from a polyamine having from 2 to 10 amine nitrogen atoms. This amine can contain up to 20 carbon atoms. The hydrocarbyl and substituted hydrocarbyl groups of the amine include aliphatic, alicyclic, aromatic or hetrocyclic groups. The substituted hydrocarbyl group includes those hydrocarbyl groups substituted by one or more non-interfering atoms or substituents, including ring oxygen and keto, hydroxy, nitro, cyano, alkoxy and acyl, particularly alkanoyl. The hydrocarbyl groups are preferably relatively free of aliphatic unsaturation.

Non-limiting illustrative compounds of formula I include those wherein:

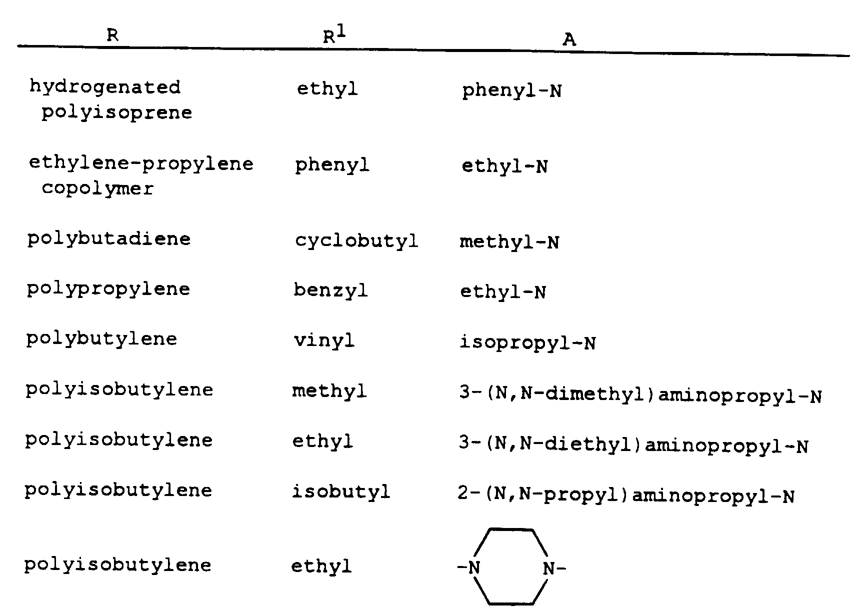

The hydrocarbyl and substituted hydrocarbyl groups of R¹ in formula IV may conveniently include aliphatic, alicyclic, aromatic or heterocyclic groups optionally substituted by one or more non-interfering atoms or substituents including ring-O, ring-N and keto, hydroxy, nitro, cyano, alkoxy and acyl groups. The compounds of formula IV are generally available in the art. Preferred compounds of formual IV include those compounds wherein R¹ is an alkyl group containing from 1 to 10 carbon atoms, an alkenyl group containing from 2 to 7 carbon atoms, a cycloalkyl group containing from 3 to 7 ring carbons and a total of 3 to 10 carbon atoms or an aryl, aralkyl or alkaryl group containing from 6 to 10 total carbon atoms. Preferably, R¹ is an alkenyl group containing 1 to 4 carbon atoms, such as methyl, ethyl, n-propyl, isopropyl, n-butyl or isobutyl. Preferably, R¹ is methyl, ethyl, n-butyl or isobutyl.

It will be appreciated that in cases where the polyolefin-secondary amine contains more than one nitrogen atom having a N-H linkage, depending on the molar ratio of chlorformate: polyolefin secondary amine the moiety A may contain N-COOR¹ groups in addition to or in place of N-H linkages in the eventual compound of formula I. Examples of such products are described in EP-A-533 278.

The yield of the poly(olefin)-N-substituted carbamate of formula I may be as high as 70% by weight, or even 80% by weight or more.

Preferred polyolefin-N-substituted-carbamates contain at least one olefinic polymer chain and include those of the formula II 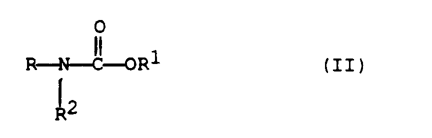 wherein R is an polyolefin radical having an average molecular weight in the range 500 to 9,900; R¹ is hydrocarbyl group containing up to 20 carbon atoms; and R² is hydrocarbyl group or a hydrocarbylaminohydrocarbyl group, each containing up to 20 total carbon atoms in the hydrocarbyl group(s).

Preferred compounds of formula I of the invention include those compounds wherein R is a polyolefin radical having an average molecular weight in the range 550 to 4,900, preferably 600 to 1300.

R¹ is preferably an alkyl group containing from 1 to 10 carbon atoms, an alkenyl group containing from 2 to 7 carbon atoms, a cycloalkyl group containing from 3 to 7 ring carbon atoms and a total of 3 to 10 carbon atoms or an aryl, aralkyl or alkaryl group containing from 6 to 10 total carbon atoms. R¹ is preferably an alkyl group containing 1 to 4 carbon atoms.

R² is preferably an alkyl group containing from 1 to 10 carbon atoms, an alkenyl group containing from 2 to 7 carbon atoms, a cycloalkyl group containing from 3 to 7 ring carbon atoms and a total of 3 to 10 carbon atoms or an aryl, aralkyl or alkaryl group containng from 6 to 10 total carbon atoms, or more preferably, a group of formula III 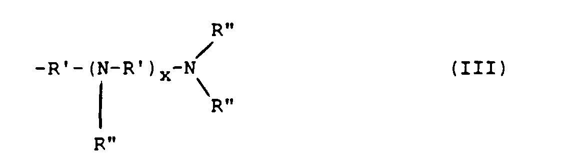 wherein each R' is independently an alkylene group containing from 1 to 8 carbon atoms, prferably from 1 to 4 carbon atoms, more preferably propylene; and each R" is independently a hydrogen atom, a group - COOR¹, where R¹ is as defined above, provided that no N atom bears two -COOR¹ groups, or an alkyl group containing from 1 to 7 carbon atoms, preferably from 1 to 4 carbon atoms, more preferably a methyl group; and x is 0 to 23, preferably 0 to 20, more preferably 0 to 5, and advantageously 0. It is preferred for each R" independently to represent a hydrogen atom or an alkyl group of 1 to 7 carbon atoms. Preferably, when R² is a group of formula III, each R' is an alkylene group containing from 1 to 4 carbon atoms; each R" is independently an alkyl group containing from 1 to 4 carbon atoms and x is 0 to 5, e.g. 0 to 2, preferably O or 1. Especially preferred is for R' to be propylene, each R" to be a methyl group and x to be from 0 to 5, preferably 0.

It is preferred for the resulting compound of formula I or II to contain a single NCOOR¹ moiety, and in order to achieve this it is preferred that the molar ratio polyolefin-secondary-amine:chloroformate compound of formula IV is greater than 1:1, e.g. in the range 1.05:1 to 1.3:1.

The polyolefin-secondary amine intermediates (including polyamines) can be prepared by reacting olefinic polymers with amines employing conventional procedures, e.g. as described in EP-A-414 963.

These oil-soluble polyolefin-secondary amine intermediates have at least one polymer chain having a molecular weight in the range from 500 to 9,900 and preferably from 550 to 4,900, and particularly from 600 to 1,300, which can be saturated or unsaturated and straight or branch chain and is/are attached to a nitrogen and/or a carbon atom of the amine.

Preferred polyolefin-N-substituted-secondary-amine intermediates are polyalkylene polyamines having the structural formula V 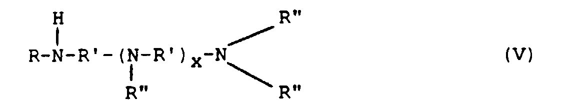 wherein R represents a polyolefin radical having a molecular weight in the range 500 to 9,900, each R' is an alkylene radical having from 1 to 8 carbon atoms, preferably 1 to 4 carbon atoms, each R" is independently hydrogen or lower alkyl containing 1 to 7 carbon atoms and x is from 0 to 5. Preferred is a polyamine wherein R is a branch-chain polyolefin radical in the molecular weight range of 550 to 4,900, with a molecular weight range of 600 to 1300 being preferred.

The polyolefins which give rise to R in formulae I, II and V are reacted with amines to form the polyolefin-N-substituted-secondary-amine intermediates of the present invention by methods which are known in the art, e.g. from U.S. Patent No. 4,357,148, and include polyolefins derived from alkanes or alkenes with straight or branched chains, which may nor may not have aromatic or cycloaliphatic substituents, for instance, groups derived from polymers or copolymers of olefins which may or may not have a double bond. Examples of non-substituted alkenyl and alkyl groups are polyethylene groups, polypropylene groups, polybutylene groups, polyisobutylene groups, polyethylene-polypropylene groups, polyethylene-polyalphamethyl styrene groups and the corresponding groups without double bonds. Particularly preferred are polypropylene and polyisobutylene groups. Polyisobutylene groups are conveniently effective.

The R" group can be hydrogen but is preferably lower alkyl, i.e. containing up to 7 carbon atoms and more preferably an alkyl group containing from 1 to 4 carbon atoms, e.g. methyl, ethyl, propyl or butyl.

Suitable amine reactants are broadly referred to as (poly)amines to include both polyamines and monoamines as hereinafter more fully described. The (poly)amines used to react with the polyolefins to form the polyolefin-N-substituted-secondary-amine intermediates include aliphatic, alicyclic, aromatic or heterocyclic monoamines or polyamines. A variety of such amines is well documented in the art including U.S. Patent No. 4,191,537. The amines can contain other non-reactive substitutes. Suitable substituents for such amines include alkyls such as methyl, ethyl, propyl, butyl, isobutyl, pentyl, hexyl and octyl; alkenyls such as propenyl, isobutenyl, hexenyl and octenyl; hydroxyalkyls, such as 2-hydroxyethyl, 3-hydroxypropyl, hydroxy-isopropyl and 4-hydroxybutyl; ketoalkyls, such as 2-ketopropyl and 6-ketooctyl; alkoxy and lower alkenoxyalkyls, such as ethoxyethyl, ethoxypropyl, propoxyethyl, propoxypropyl, 2-(2-ethoxyethoxy)ethyl, and acyl groups such as propionyl and acetyl groups. Preferred substituents are C₁-C₆ alkyl groups.

Heterocyclic amines can be saturated, unsaturated and substituted or unsubstituted. Suitable heterocyclic amines include piperazines, such as 2-methylpiperazine, N-(2-hydroxy-ethyl)-piperazine, 1,2-bis-(N-piperazinyl)ethane, and N,N'-bis-(N-piperazinyl)piperazine, 2-methylimidazoline, 3-amino-piperidine, 2-aminopyridine, 2-(3-aminoethyl)-3-pyrroline, 3-aminopyrrolidine, N-(3-aminopropyl)morpholine, and the like. Among the heterocyclic compounds, the piperazines are preferred.

The amine reactants include mixtures of compounds, such as mono and polysubstituted polyamines or isomers.

The polyamines used to form the preferred polyolefin polyamine intermediate compounds of this invention include low molecular weight aliphatic polyamines such as ethylene diamine, diethylene triamine, triethylene tetramine, propylene diamine, butylene diamine, trimethyl trimethylene diamine, tetramethylene diamine, diaminopentane or pentamethylene diamine, hexamethylene diamine, heptamethylene diamine, diaminooctane, decamethylene diamine, and higher homologues up to 18 carbon atoms.

Compounds possessing triamine as well as tetramine and pentamine groups are applicable for use because these can be prepared from technical mixtures of polyethylene polyamines, which may offer economic advantages.

The polyamine starting materials from which the polyamine groups can be derived can also be a cyclic polyamine, for instance, the cyclic polyamines formed when aliphatic polyamines with nitrogen atoms separated by ethylene groups are heated in the presence of hydrogen chloride.

Monoamines which can be used to prepare the polyolefin secondary-amines include monoamines in which the hydrocarbyl groups contain from 1 to 14 carbon atoms. For example, each hydrocarbyl group is independently selected from an alkyl group containing from 1 to 10 carbon atoms, an alkenyl group containing from 2 to 7 carbon atoms, a cycloalkyl group containing from 3 to 7 ring carbon atoms and a total of 3 to 10 carbon atoms, and aryl, aralkyl and alkaryl groups containing from 6 to 10 total carbon atoms. Preferably, the hydrocarbyl groups are independently selected from an alkyl group containing from 1 to 4 carbon atoms, e.g., ethyl or propyl.

The reaction between compound of formula IV and polyolefin-secondary amine is preferably effected at a temperature less than 90°C, preferably from 60°C to 70°C, in the presence of a solvent and a base. Reaction may conveniently be effected at atmospheric pressure. A solvent having should have a boiling point that is high enough so that the solvent does not boil off during the reaction and low enough to be able to separate the solvent from the eventual product by distillation. A convenient solvent for use in the method of this invention has a boiling point in the range from about 130°C to about 150°C. For example, xylenes are an appropriate solvent and have boiling points in the range 137 to 144°C.

The polyolefin carbamate product of formula I is recovered by conventional techniques, such as drying by stripping water or by using anhydrous sodium sulfate.

The solvent is usually removed, e.g., by stripping, for neat analysis. However, for practical applications some or all of the solvent can be retained as a diluent.

Small amounts of polyolefin-secondary-unreacted amine intermediate need not be removed from the product as the presence thereof does not interfere with the usefulness of the product of formula I. Unreacted amine can aid in the effects of the polyolefin-N-substituted-carbamates of the invention by acting as a carrier, assisting in enhancing the preventing, removing or retarding of engine deposits (particularly when the carbamate is of methyl or a non-beta hydrogen group) or by providing their known fuel detergents properties.

The function of the base during the reaction is to neutralize HCl. This is because HCl catalyzes the decomposition of chloroformates to alkyl chlorides. Formation of alkyl chlorides is undesirable since they alkylate the Basic N moieties in the polyolefin-secondary-amine. The alkyl chlorides may thereby prevent N-H moieties of the starting amine reactant from reacting as desired with the cloroformates so as to form an N-COOR¹ moiety. The alkyl chlorides may also react with other Basic N moieties, e.g. -N(CH₃)₂ groups, where it is preferred that such other Basic N moieties should not react at all during the process. This is because it may be desired to have a remaining Basic N in the additive to neutralize acids in the gasoline or acids resulting from combustion of the gasoline.

Accordingly, the base used in the method of this invention is one having a strong enough basicity to neutralize HCl and a low enough nucleophilicity so as not to react with chloroformate. Such base is needed since it will neutralize the HCl and thus prevent the HCl from catalyzing the disassociation of chloroformates. At the same time such a base will not itself react with the chloroformate. Suitable bases include basic alkali metal compounds, such as alkali metal carbonates, bicarbonates or alkanoates, e.g. acetates, or mixtures thereof, e.g., sodium or potassium carbonate, sodium or potassium bicarbonate, sodium acetate, or mixtures thereof.

Sodium and potassium bicarbonates are preferred bases since they result in less solid waste, a solid waste having a low pH and a higher yield of product. The base is preferably granular in form and more preferably less than about 100 microns. The less the diameter the higher the surface area. Higher surface areas permit smaller reaction vessels. Preferably the salt waste produced has a pH less than about 10. Such low pH levels are deemed non-hazardous in some environmental regulations. Preferably the reaction produces less than about 10% by weight of the waste based on the weight of the waste and carbamate produced. The term "waste" includes alkali metal chloride, such as NaCl, and excess unreacted base, e.g., sodium bicarbonate.

The invention will be further understood from the following illustrative example of the invention and comparative example not of the invention. Here and elsewhere in this specification, the term "average molecular weight" signifies number average molecular weight (Mn).

### Comparative Example A - No Base Present During Reaction (corresponds to first compound of Example 2 of EP-A-414 963)

### Preparation of a Compound of Formula I with R¹= methyl; R = polyisobutylene of 900 average molecular weight; and A = N-CH₂CH₂CH₂N(CH₃)₂

Five Hundred grams of polyisobutylene-NH-(CH₂)₃-N(CH₃)₂ (80.5% non-volatile, 19.5% xylenes, and containing 1.50% basic nitrogen) (0.4 mol) were charged to a 1000 ml, round-bottomed flask equipped with a air-driven stirrer, reflux condenser, thermometer, and addition funnel. To the addition funnel were added 34.4 grams (0.36 mol) of methyl chloroformate and 21 ml of toluene. The toluene solution was added dropwise at ambient temperature (20°C) to the round-bottomed flash with stirring. The addition took about 10 minutes with an increase of 36°C in reaction temperature. The reaction flask was heated to 160°C after the addition was completed and maintained at that temperature for 1 hour. The addition funnel was removed and replaced with a powder funnel. Through this latter funnel was added a solution of 44.0 grams of sodium bicarbonate in 177 grams of water. Upon completion of the addition, the flask was heated to 100°C for one hour.

The contents of the reaction flask were transferred to a 2000 ml separatory funnel where the layers were separated and the lower water layer was removed. The remaining layer was treated three times with 150 ml of water. The water was removed and the contents of the funnel were transferred to a 2000 ml Erlenmeyer flask. Five hundred ml of toluene were added to the flask together with anhydrous sodium sulfate. After one hour of stirring, the contents of the Erlenmeyer flask were filtered and solvent removed by rotary evaporation. Evaluation of the neat material revealed a 60% molar conversion.

### Example 1 - Base Present During Reaction

A compound of formula I with R¹ = methyl; R = polyisobutylene of 900 average molecular weight; and A = N-CH₂CH₂CH₂N(CH₃)₂, was prepared according to the invention as follows.

Five Hundred grams of polyisobutylene-NH-(CH₂)₃-N(CH₃)₂ (80.5% non-volatile, 19.5% xylenes, and containing 1.50% basic nitrogen) (0.4 mol) were charged to a 1000 ml, round-bottomed flask equipped with an air-driven stirrer, reflux condenser, thermometer, and powder funnel. Through the powder funnel was added 44.0 grams of dry sodium bicarbonate. The powder funnel was removed and an addition funnel was positioned. To the addition funnel was added 34.4. grams (0.36 mol) of methyl chloroformate and 21 ml of toluene. The toluene solution was added dropwise at 70°C to the round-bottomed temperature. Upon completion of the addition, the reaction flask was maintained at 70°C for 1 hour. The reaction mixture was then further treated as in Comparative Example A except that the 44.0 grams of sodium bicarbonate were omitted from the 177 grams of water. Evaluation of the resulting neat material revealed a 85% molar conversion.

**Table 2:**

| Comparative Results With and Without a Base Present During Reaction | | | | |
|---|---|---|---|---|
| | Sodium Bicarbonate (g) | Temp (°C) | Conversion (mol %) | Waste * pH |
| With Base (Ex. 1) | 44 | 70 | 85 | 8.6 |
| Without Base (Comp. Ex. A) | -------- | 160 | 60 | 10.3 |

| | | | | |
|---|---|---|---|---|
| * Waste contains NaCl and unreacted base in the case of Example 1. | | | | |

Results of these tests demonstrate that the process of the invention for making poly(olefin)-N-substituted-carbamates is very useful in significantly increasing yield and reducing solid waste production, and reducing the pH of the resulting waste. The small amount of waste that is produced is in a form suitable for easy and environmentally safe disposal.

## Claims

1. A process for preparing a carbamate which comprises contacting in the presence of a base a polyolefin-secondary-amine with a chloroformate compound of the formula IV 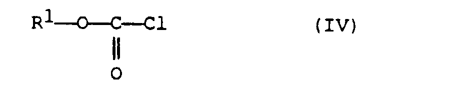 in which R¹ is a hydrocarbyl or substituted hydrocarbyl group containing up to 20 carbon atoms, thereby producing a polyolefin-N-substituted-carbamate of formula I 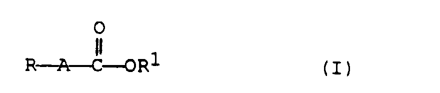 in which R is a polyolefin radical having an average molecular weight in the range from 500 to 9,900, R¹ is a hydrocarbyl or substituted hydrocarbyl group containing up to 20 carbon atoms, and A is derived from an N-substituted amino group in which the substituent is a hydrocarbyl or substituted hydrocarbyl group containing up to 20 carbon atoms, and removing hydrogen chloride formed in producing the carbamate of formula I as a salt.

2. A process according to Claim 1 wherein the base is sodium carbonate, sodium bicarbonate, or a mixture thereof.

3. A process according to Claim 2 wherein the base is sodium bicarbonate.

4. A process according to any one of Claims 1 to 3 wherein R¹ in formula IV represents an aliphatic, alicyclic, aromatic, or heterocyclic group optionally substituted by one or more substituents independently selected from ring-O, ring-N and keto, hydroxy, nitro, cyano, alkoxy, and acyl groups.

5. A process according to Claim 4 wherein R¹ is an alkyl group containing from 1 to 10 carbon atoms, an alkenyl group containing from 2 to 7 carbon atoms, a cycloalkyl group containing from 3 to 7 ring carbon atoms and a total of 3 to 10 carbon atoms, or an aryl, aralkyl or alkaryl group containing from 6 to 10 total carbon atoms.

6. A process according to any one of Claims 1 to 5 wherein the polyolefin-N-substituted-secondary-amine comprises a polyalkylene polyamine having the structural formula V 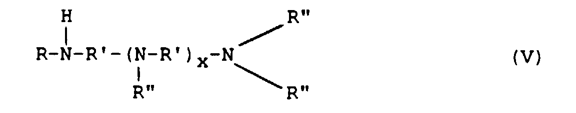 wherein R represents a polyolefin radical having a molecular weight in the range 500 to 9,900, each R' is an alkylene radical having from 1 to 8 carbon atoms, each R" is independently hydrogen or a lower alkyl containing from 1 to 7 carbon atoms, and x is from 0 to 5.

7. A process according to Claim 6 wherein R of formula V is a branch-chain polyolefin radical having a molecular weight from 600 to 1300.

8. A process according to Claim 6 or 7 wherein each alkylene radical R' has from 1 to 4 carbon atoms.

9. A process according to any one of Claims 1 to 8 wherein reaction is effected at a temperature less than 90°C in the presence of a solvent.

10. A process according to any one of Claims 1 to 9 wherein the molar ratio polyolefin-secondary amine: chloroformate compound of formula IV is greater than 1:1.

## Patentansprüche

1. Verfahren zur Herstellung eines Carbamats, welches Verfahren ein Inkontaktbringen eines Polyolefin-sekundären Amins mit einer Chlorformiatverbindung der Formel IV 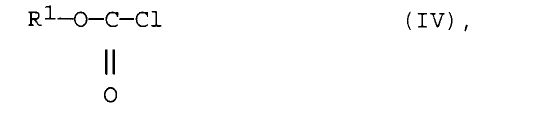 worin R¹ eine Hydrocarbylgruppe oder substituierte Hydrocarbylgruppe mit bis zu 20 Kohlenstoffatomen bedeutet, in Gegenwart einer Base umfaßt, unter Ausbildung eines Polyolefin-N-substituierten Carbamats der Formel I 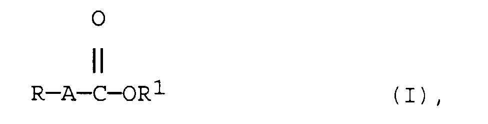 worin R einen Polyolefinrest mit einem mittleren Molekulargewicht im Bereich von 500 bis 9.900 darstellt, R¹ eine Hydrocarbylgruppe oder substituierte Hydrocarbylgruppe mit bis zu 20 Kohlenstoffatomen bedeutet und A von einer N-substituierten Aminogruppe abgeleitet ist, worin der Substituent eine Hydrocarbylgruppe oder substituierte Hydrocarbylgruppe mit bis zu 20 Kohlenstoffatomen ist, und ein Abtrennen von Chlorwasserstoff, der bei der Ausbildung des Carbamats der Formel I gebildet wird, als ein Salz umfaßt.

2. Verfahren nach Anspruch 1, worin die Base Natriumcarbonat, Natriumbicarbonat oder ein Gemisch hievon ist.

3. Verfahren nach Anspruch 2, worin die Base Natriumbicarbonat ist.

4. Verfahren nach einem der Ansprüche 1 bis 3, worin R¹ in Formel IV für eine aliphatische, alicyclische,aromatische oder heterocyclische Gruppe steht, die gegebenenfalls durch einen oder mehrere Substituenten, unabhängig voneinander ausgewählt unter Ringsauerstoff, Ringstickstoff und Keto-, Hydroxy-, Nitro-, Cyano-, Alkoxy- und Acylgruppen, substituiert ist.

5. Verfahren nach Anspruch 4, worin R¹ eine Alkylgruppe mit 1 bis 10 Kohlenstoffatomen, eine Alkenylgruppe mit 2 bis 7 Kohlenstoffatomen, eine Cycloalkylgruppe mit 3 bis 7 Ringkohlenstoffatomen und insgesamt 3 bis 10 Kohlenstoffatomen oder eine Aryl-, Aralkyl- oder Alkarylgruppe mit insgesamt 6 bis 10 Kohlenstoffatomen darstellt.

6. Verfahren nach einem der Ansprüche 1 bis 5, worin das Polyolefin-N-substituierte sekundäre Amin ein Polyalkylenpolyamin mit der Strukturformel V 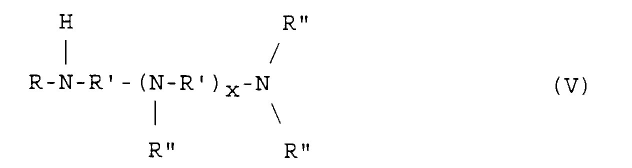 umfaßt, worin R einen Polyolefinrest mit einem Molekulargewicht im Bereich von 500 bis 9.900 darstellt, jeder Rest R' einen Alkylenrest mit 1 bis 8 Kohlenstoffatomen bedeutet, jeder Rest R" unabhängig Wasserstoff oder ein Niederalkyl mit 1 bis 7 Kohlenstoffatomen bedeutet und x einen Wert von 0 bis 5 aufweist.

7. Verfahren nach Anspruch 6, worin R von Formel V ein verzweigtkettiger Polyolefinrest mit einem Molekulargewicht von 600 bis 1.300 bedeutet.

8. Verfahren nach Anspruch 6 oder 7, worin jeder Alkylenrest R' 1 bis 4 Kohlenstoffatome aufweist.

9. Verfahren nach einem der Ansprüche 1 bis 8, worin die Umsetzung bei einer Temperatur unter 90°C in Anwesenheit eines Lösungsmittels ausgeführt wird.

10. Verfahren nach einem der Ansprüche 1 bis 9, worin das Molverhältnis Polyolefin-sekundäres Amin: Chlorformiatverbindung der Formel IV größer als 1:1 ist.

## Revendications

1. Procédé de préparation d'un carbamate qui comprend la mise en contact, en présence d'une base, d'une polyoléfine-amine secondaire avec un composé du type chloroformiate de la formule IV 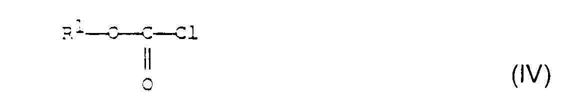 dans laquelle R¹ représente un radical hydrocarbyle ou un radical hydrocarbyle substitué, contenant jusqu'à 20 atomes de carbone, de manière à ainsi produire un polyoléfine-carbamate N-substitué de la formule I 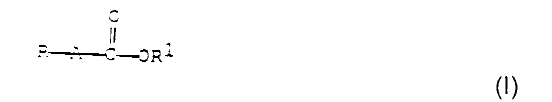 dans laquelle R représente un radical polyoléfine possédant un poids moléculaire moyen qui fluctue de 500 à 9.900, R¹ représente un radical hydrocarbyle ou un radical hydrocarbyle substitué, contenant jusqu'à 20 atomes de carbone et A dérivé d'un radical amino N-substitué, dans lequel le substituant est un radical hydrocarbyle ou hydrocarbyle substitué, contenant jusqu'à 20 atomes de carbone et l'élimination du chlorure d'hydrogène formé au cours de la production du carbamate de la formule I, sous la forme d'un sel.

2. Procédé suivant la revendication 1, caractérisé en ce que la base est le carbonate de sodium, le bicarbonate de sodium ou un mélange de ceux-ci.

3. Procédé suivant la revendication 2, caractérisé en ce que la base est le bicarbonate de sodium.

4. Procédé suivant l'une quelconque des revendications 1 à 3, caractérisé en ce que R¹ dans la formule IV représente un radical alicyclique, aromatique ou hétérocyclique, éventuellement substitués par un ou plusieurs substituants indépendamment choisis parmi les radicaux O-cyclique, N-cyclique et céto, hydroxyle, nitro, cyano, alcoxy et acyle.

5. Procédé suivant la revendication 4, caractérisé en ce que R¹ représente un radical alkyle comportant de 1 à 10 atomes de carbone, un radical alcényle comportant de 2 à 7 atomes de carbone, un radical cycloalkyle comportant de 3 à 7 atomes de carbone et un total de 3 à 10 atomes de carbone, ou un radical aryle, aralkyle ou alcaryle comportant de 6 à 10 atomes de carbone au total.

6. Procédé suivant l'une quelconque des revendications 1 à 5, caractérisé en ce que la polyoléfine-amine secondaire N-substituée comprend une polyalkylènepolyamine possédant la formule de structure V 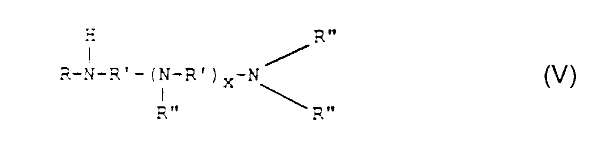 dans laquelle R représente un radical polyoléfine possédant un poids moléculaire qui varie de 500 à 9.900, chaque symbole R' représente un radical alkylène comportant de 1 à 8 atomes de carbone, chaque symbole R" représente indépendamment de l'hydrogène ou un radical alkyle contenant de 1 à 7 atomes de carbone et x a une valeur qui varie de 0 à 5.

7. Procédé suivant la revendication 6, caractérisé en ce que R dans la formule V est un radical polyoléfinique à chaîne ramifiée possédant un poids moléculaire qui varie de 600 à 1300.

8. Procédé suivant la revendication 6 ou 7, caractérisé en ce que chaque radical alkylène R' possède de 1 à 4 atomes de carbone.

9. Procédé suivant l'une quelconque des revendications 1 à 8, caractérisé en ce que l'on entreprend la réaction à une température inférieure à 90°C et en présence d'un solvant.

10. Procédé suivant l'une quelconque des revendications 1 à 9, caractérisé en ce que le rapport molaire polyoléfine-amine secondaire: composé du type chloroformiate de la formule IV est supérieure à 1:1.
